# EUROPÄISCHE PATENTSCHRIFT

(11) **EP 3 454 965 B1**
(45) Veröffentlichungstag und Bekanntmachung des Hinweises auf die Patenterteilung: **06.05.2020**
(21) Anmeldenummer: 17726846.3
(22) Anmeldetag: 10.05.2017
(51) Int. Cl.: B01D 35/18, F01M 5/00, F01M 11/03, F16B 1/02, F16B 19/02

(54) **FLÜSSIGFILTERMODUL**
LIQUID FILTER MODULE
MODULE DE FILTRAGE DE LIQUIDE

(30) Priorität: 10.05.2016 DE 102016208022
(43) Veröffentlichungstag der Anmeldung: 20.03.2019
(73) Patentinhaber: Mahle International GmbH, 70376 Stuttgart (DE)
(72) Erfinder: EICHINGER, Thomas, 73663 Berglen (DE); SAUPE, Kai, 71032 Böblingen (DE); WALZ, Michael, 70794 Filderstadt (DE); ZINK, Ralf, 70372 Stuttgart (DE)
(74) Vertreter: BRP Renaud & Partner mbB Rechtsanwälte Patentanwälte Steuerberater
(86) Internationale Anmeldenummer: PCT/EP2017/061173
(87) Internationale Veröffentlichungsnummer: WO 2017/194602

(56) Entgegenhaltungen:
- EP-A1- 0 969 185
- EP-A1- 2 305 360
- DE-A1- 3 048 149
- DE-A1- 3 235 292
- DE-A1-102008 053 054

## Beschreibung

Die vorliegende Erfindung betrifft ein Flüssigfiltermodul mit einer Filtereinrichtung und einem damit über ein Zwischenstück gekoppelten Wärmetauscher gemäß dem Oberbegriff des Anspruchs 1. Die Erfindung betrifft außerdem eine mit einem derartigen Flüssigfiltermodul ausgestatteten Brennkraftmaschine.

Gattungsgemäße Flüssigfiltermodule sind hinlänglich bekannt und besitzen üblicherweise ein sogenanntes Bypass-Ventil, welches besonders in der Kaltstartphase einen Ölstrom um den Wärmetauscher, das heißt um den Kühler, herum leitet, wodurch der Druckabfall geringer ist und somit die Lagerstellen schneller mit Öl versorgt werden.

Aus der EP 2 305 360 A1 ist ein gattungsgemäßes Flüssigfiltermodul mit einer Filtereinrichtung und einem damit über ein Zwischenstück gekoppelten Wärmetauscher bekannt, wobei im Zwischenstück zumindest ein Flüssigkeitskanal und ein diesen querender Aufnahmekanal zur Aufnahme eines Ventils vorgesehen sind. Das Ventil ist im konkreten Fall als Bypassventil ausgebildet und mittels eines Bajonettverschlusses am Zwischenstück befestigt. Hierdurch soll insbesondere eine Montage bzw. Demontage des Ventils vereinfacht werden.

Aus der EP 0 969 185 A1 ist eine Ölfitereinrichtung eines Motorrades mit einem Ventil bekannt.

Aus der DE 32 35 292 A1 ist eine Brennkraftmaschine mit einem Thermostatventil in einem Topf einer Ölwanne bekannt.

Ein derartiger Bajonettverschluss zur Fixierung des Ventils am Zwischenstück ist dabei jedoch konstruktiv aufwendig und auch teuer und stellt immer auch ein zusätzliches Bauteil dar, welches die Lager- und Logistikkosten erhöht und einen zusätzlichen Montageaufwand erfordert. Ist ein solches Bypassventil nicht erwünscht, muss ein separater Verschlussstopfen aufwendig montiert werden.

Die vorliegende Erfindung beschäftigt sich daher mit dem Problem, für ein Flüssigfiltermodul der gattungsgemäßen Art eine verbesserte oder zumindest eine alternative Ausführungsform anzugeben, die insbesondere einfacher aufgebaut und flexibler ist.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, nicht mehr eine separate Verschlusseinrichtung zur Fixierung eines Einbauteils, insbesondere eines Verschlusselements oder eines Ventils, an einem Zwischenstück eine Flüssigfiltermoduls zu verwenden, sondern ein äußerst einfaches Sicherungselement, welches darüber hinaus noch eine Zusatzfunktion erfüllen kann. Das erfindungsgemäße Flüssigfiltermodul besitzt dabei eine Filtereinrichtung sowie einen damit über ein Zwischenstück gekoppelten Wärmetauscher, wobei in dem Zwischenstück zumindest ein Flüssigkeitskanal und ein diesen querender Aufnahmekanal zur Aufnahme des Einbauteils vorgesehen sind. Erfindungsgemäß ist nun zur Sicherung des Einbauteils in dem Aufnahmekanal ein den Aufnahmekanal querender Kanal vorgesehen, in dem das zuvor erwähnte Sicherungselement angeordnet ist. Dieses Sicherungselement kann bspw. als Hülse ausgebildet sein, die beispielsweise bei einem Zwischenstück und/oder einem Einbauteil aus Kunststoff benötigt wird, um das Flüssigfiltermodul an einer Brennkraftmaschine festschrauben zu können.

Würde eine derartige Hülse nicht eingesetzt, so würde beim Festziehen der Schrauben das aus Kunststoff ausgebildete Zwischenstück die auftretenden Kräfte nicht aufnehmen können und zusammengedrückt werden. Das Einbauteil ist dabei erfindungsgemäß als Verschlusselement oder als Ventil ausgebildet, insbesondere auch als Bypassventil. Das Sicherungselement kann dabei zusätzlich als Positionierhilfe ausgebildet sein, welche einerseits in eine Ausnehmung an einem Rand des Wärmetauschers und andererseits in den Kanal eingreift und dadurch eine Relativlage des Wärmetauschers am Zwischenstück definiert. Unabhängig von der jeweils gewählten Variante ist bei dem erfindungsgemäßen Flüssigfiltermodul jedoch keine aufwendige Befestigungstechnik, wie bspw. ein Bajonettverschluss, zur Fixierung des Einbauteils, das heißt des Verschlusselements oder des Bypassventils, in dem Aufnahmekanal erforderlich. Vielmehr können hierzu, insbesondere im Falle der zuvor erwähnten Hülse, ohnehin vorhandene Bauteile des Flüssigfiltermoduls mit einer Zusatzfunktion belegt und zur Sicherung des Einbauteils im Aufnahmekanal benutzt werden. Hierdurch reduzieren sich besonders ein konstruktiver Aufwand und darüber auch die Herstellungskosten. Zudem kann die Flexibilität des Flüssigfiltermoduls gesteigert werden, da ein alternativer Einbau des Verschlusselements oder des Bypassventils vergleichsweise einfach und ohne Modifikationen möglich ist.

Bei einer vorteilhaften Weiterbildung der erfindungsgemäßen Lösung ist das Verschlusselement als Kunststoffspritzgussteil oder aus Metall ausgebildet. Hierdurch kann eine einerseits kostengünstige und andererseits qualitativ hochwertige Fertigung ermöglicht werden.

Zweckmäßig weist das Verschlusselement eine Umfangsringnut auf, in welcher eine O-Ringdichtung angeordnet ist, über die das Verschlusselement flüssigkeitsdicht im Aufnahmekanal aufgenommen ist. Über die direkt zwischen dem Verschlusselement und einer Wandung des Aufnahmekanals angeordnete O-Ringdichtung, kann eine zuverlässige Abdichtung des Verschlusselements erreicht werden, so dass in diesem Fall auf separate Deckel zum dichten Verschluss des Aufnahmekanals verzichtet werden kann. Hierdurch lassen sich die Teilevielfalt und die Herstellungskosten reduzieren.

Zweckmäßig weist das Verschlusselement eine Durchgangsöffnung auf, durch die das Sicherungselement hindurch greift. Über diese Durchgangsöffnung kann eine winkelgenaue Einbaulage des Verschlusselements in dem Aufnahmekanal erzwungen werden, ebenso wie eine zuverlässige Fixierung des Verschlusselements im Aufnahmekanal.

Bei einer vorteilhaften Weiterbildung der erfindungsgemäßen Lösung ist die Hülse kürzer oder gleich lang wie die Höhe des Zwischenstücks. Um beim Anziehen der das Flüssigfiltermodul an der Brennkraftmaschine fixierenden Schrauben ein Zusammendrücken des aus Kunststoff ausgebildeten Zwischenstücks zuverlässig vermeiden zu können, sind die zuvor erwähnten Hülsen vorgesehen, deren Länge im Wesentlichen der Höhe des Zwischenstücks entspricht und dadurch eine Fixierung des Flüssigfiltermoduls an der Brennkraftmaschine ohne schadhafte Quetschung des Zwischenstücks ermöglicht. Vorzugsweise ist dabei die Länge der Hülse geringfügig kleiner als die Höhe des Zwischenstücks, um eine vordefinierte Spannung auf das Zwischenstück aufbringen zu können. Sind das Zwischenstück und das Einbauteil aus Metall ausgebildet, so kann generell auf die Hülse verzichtet und die Fixierung des Einbauteil nur mit einer Schraube vorgenommen werden.

In einer weiteren vorteilhaften Ausführungsform ist die Hülse gleichlang oder länger wie die Höhe des Zwischenstücks. Bei einem Überstand der Hülse über die Höhe des Zwischenstücks kann die Hülse zusätzlich noch als Positionierhilfe für ein Zusatzaggregat, vorzugsweise einen Wärmetauscher, eine Filtergehäusehälfte, usw., dienen und ersetzt damit eine zusätzliche Positionierung des angeordneten Zusatzaggregats.

Erfindungsgemäß weist der Wärmetauscher eine Grundplatte mit einer an einem Rand der Grundplatte angeordneten Durchgangsöffnung auf, die bei montiertem Flüssigfiltermodul mit dem Kanal im Zwischenstück fluchtet. Durch die Durchgangsöffnung und den damit fluchtenden Kanal kann wahlweise die Hülse und die darin geführte Befestigungsschraube zur Fixierung des Flüssigfiltermoduls an der Brennkraftmaschine gesteckt bzw. geschraubt werden oder aber lediglich ein als Positionierstift ausgebildetes Sicherungselement, welches ausschließlich der Bestimmung einer definierten Relativlage des Wärmetauschers in Bezug auf das Zwischenstück dient. Um eine eindeutig definierte Einbaulage bewirken zu können, kann zusätzlich auch ein Positionierelement vorgesehen sein, welches einerseits in eine Ausnehmung am Wärmetauscher und andererseits in eine Ausnehmung am Zwischenstück eingreift und darüber eine Relativlage des Wärmetauschers am Zwischenstück definiert. Zusammen mit dem Positionierstift bzw. der Hülse kann mit dem Positionierelement eine eindeutige Relativlage erzwungen werden. Eine derartig eindeutige Relativlage vereinfacht insbesondere die Montage des Flüssigfiltermoduls.

Bei einer vorteilhaften Weiterbildung der erfindungsgemäßen Lösung ist das Zwischenstück aus Kunststoff, insbesondere als Kunststoffspritzgussteil, ausgebildet. Eine Ausbildung des Zwischenstücks als Kunststoffspritzgussteil ermöglicht einerseits eine kostengünstige und andererseits eine zugleich qualitativ hochwertige Fertigung des Zwischenstücks. Alternativ ist auch eine Ausbildung aus Metall denkbar, was den großen Vorteil bietet, dass dann auf die Hülse verzichtet werden kann, insbesondere sofern zusätzlich auch das Einbauteil aus Metall ausgebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung durch ein erfindungsgemäßes Flüssigfiltermodul im Bereich eines als Verschlusselement ausgebildeten Einbauteils,
- Fig. 2: eine Ansicht auf die Darstellung in Fig. 1 mit entferntem Verschlusselement,
- Fig. 3: eine Ansicht ähnlich wie in Fig. 2, jedoch mit eingesetztem Verschlusselement,
- Fig. 4: eine Ansicht auf das Flüssigfiltermodul im Bereich eines als Ventil ausgebildeten Einbauteils,
- Fig. 5: eine Schnittdarstellung durch das Flüssigfiltermodul im Bereich eines als Ventil ausgebildeten Einbauteils.

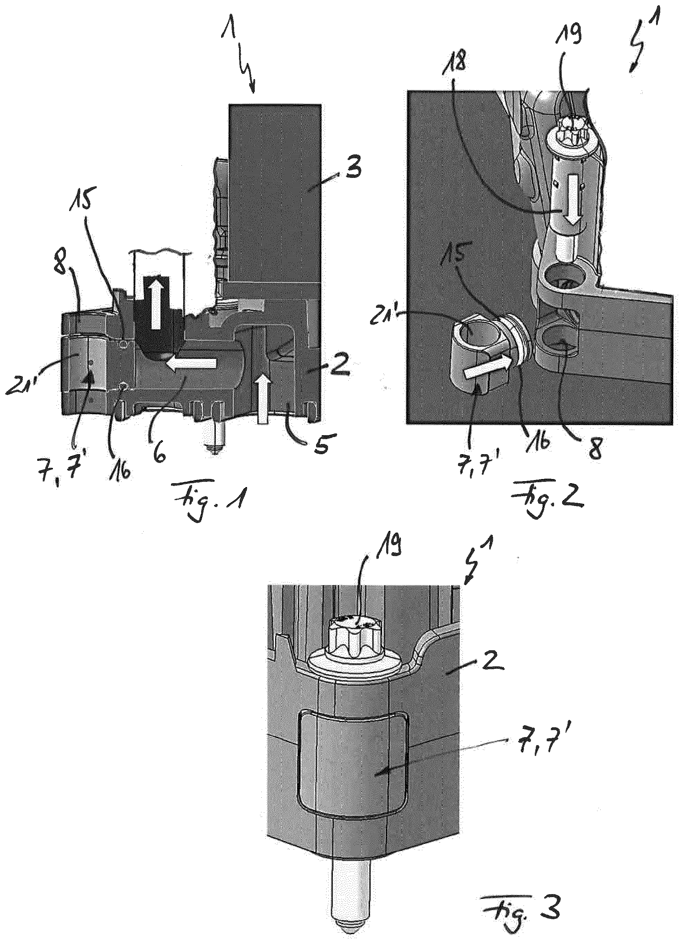

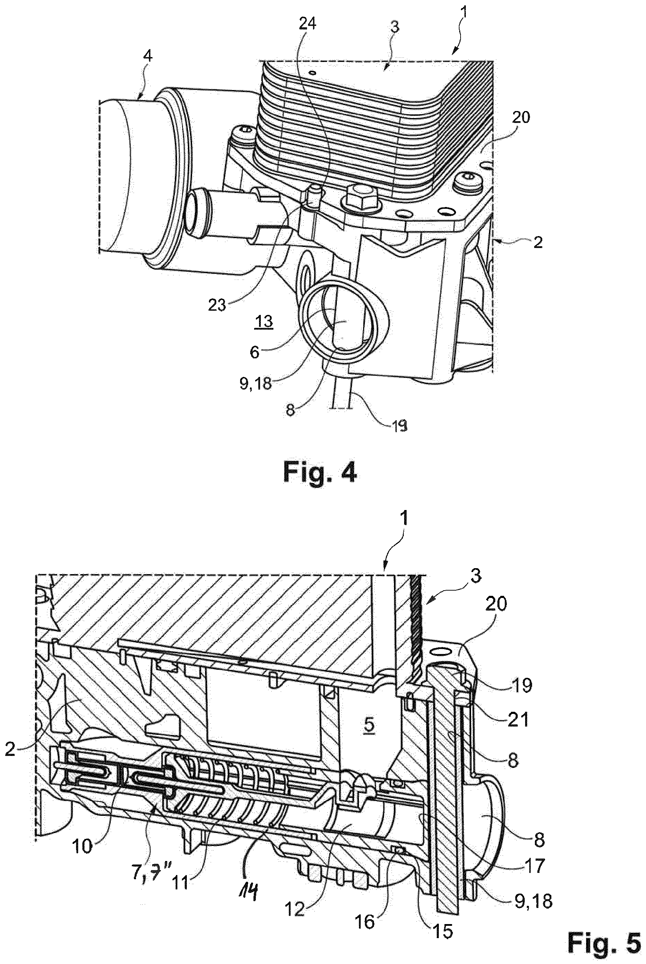

Entsprechend den Fig. 1 bis 5, weist ein erfindungsgemäßes Flüssigfiltermodul 1, insbesondere ein Ölfiltermodul, ein Zwischenstück 2 auf, an welchem ein Wärmetauscher 3 und eine Filtereinrichtung 4 (vgl. Fig. 4) angeordnet sind. Das Zwischenstück 2 ist dabei aus Kunststoff, insbesondere als Kunststoffspritzgussteil, oder aus Metall ausgebildet. Im Zwischenstück 2 sind zumindest ein Flüssigkeitskanal 5 (vgl. auch die Fig. 5) und ein diesen querender Aufnahmekanal 6 zur Aufnahme eines Einbauteils 7 vorgesehen. Zur Sicherung des Einbauteils 7 in dem Aufnahmekanal 6 ist ein den Aufnahmekanal 6 querender Kanal 8 vorgesehen, in dem ein Sicherungselement 9 angeordnet ist.

Erfindungsgemäß ist dabei das Einbauteil 7 als Verschlusselement 7' oder als Ventil 7", insbesondere als Bypassventil, ausgebildet. Sofern erwünscht, kann somit anstelle des Verschlusselementes 7 auch das Ventil 7" (vgl. Fig. 4 und 5) eingesetzt werden, wodurch die Flexibilität deutlich erhöht werden kann.

Das Verschlusselement 7' weist eine Durchgangsöffnung 21' auf, durch die das Sicherungselement 9 hindurch greift. Über diese Durchgangsöffnung 21' kann eine winkelgenaue Einbaulage des Verschlusselements 7' in dem Aufnahmekanal 6 erzwungen werden, ebenso wie eine zuverlässige Fixierung des Verschlusselements 7' im Aufnahmekanal 6.

Das Verschlusselement 7' ist vorzugsweise als Kunststoffspritzgussteil ausgebildet und dadurch kostengünstig und qualitativ hochwertig herstellbar. Alternativ ist auch denkbar, dass das Verschlusselement 7' aus Metall ausgebildet ist.

Betrachtet man die Fig. 1 und 2, so kann man erkennen, das Verschlusselement 7' eine Umfangsringnut 15 aufweist, in welcher eine O-Ringdichtung 16 angeordnet ist, über die das Verschlusselement 7' flüssigkeitsdicht im Aufnahmekanal 6 des Zwischenstücks 2 aufgenommen ist. Alternativ ist selbstverständlich auch denkbar, dass das Verschlusselement 7' über eine Axialdichtung gegenüber dem Aufnahmekanal 6 abgedichtet ist.

Das Ventil 7" besitzt dabei ein Gehäuse 14 mit einem darin angeordneten Wachsdehnelement 10, einer Feder 11 sowie einem Arbeitskolben 12 (vgl. Fig. 5). Das Wachsdehnelement 10 verstellt dabei temperaturabhängig den Arbeitskolben 12, woraufhin dieser einen den Wärmetauscher 3 umgehenden Bypasskanal freigibt oder verschließt. Dies ist insbesondere bei einem Kaltstart einer mit dem erfindungsgemäßen Flüssigfiltermodul 1 ausgestatteten Brennkraftmaschine 13 von Bedeutung. Betrachtet man insbesondere die Fig. 5, so kann man erkennen, dass das Gehäuse 14 ebenfalls eine Umfangsringnut 15 aufweist, in welcher eine O-Ringdichtung 16 angeordnet ist, über die das Ventil 7" flüssigkeitsdicht im Aufnahmekanal 6 aufgenommen ist. An einer Stirnseite des Gehäuses 14 ist dabei eine Führungskontur 17, bspw. als in Querrichtung verlaufende Rinne vorgesehen, in die das Sicherungselement 9 in montiertem Zustand zumindest teilweise eingreift, wie dies bspw. gemäß der Fig. 5 zu erkennen ist.

Prinzipiell kann das Sicherungselement 9 bspw. als Hülse 18 ausgebildet sein, durch die eine Schraube 19 zur Befestigung des Flüssigfiltermoduls 1 an der Brennkraftmaschine 13 geführt ist. Eine derartige Hülse 18 ist üblicherweise vorhanden, da ein Verspannen des Flüssigfiltermoduls 1 an der Brennkraftmaschine 13 ohne eine derartige Hülse 18 zu einem übermäßigen Zusammendrücken des beispielsweise aus Kunststoff ausgebildeten Zwischenstücks 2 führen und dieses dadurch beschädigen würde. Die Hülse 18 ist dabei kürzer oder gleich lang wie die Höhe des Zwischenstücks 2, üblicherweise geringfügig kürzer, wodurch eine vordefinierte Anschraubkraft und auch eine vordefinierte Druckkraft auf das Zwischenstück 2 gewährleistet werden können.

Alternativ kann die Hülse 18 auch gleichlang oder länger sein wie die Höhe des Zwischenstücks 2. Bei einem Überstand der Hülse 18 über die Höhe des Zwischenstücks 2 kann die Hülse 18 zusätzlich noch als Positionierhilfe für ein Zusatzaggregat, vorzugsweise einen Wärmetauscher 3, eine Filtergehäusehälfte, usw., dienen und ersetzt damit eine zusätzliche Positionierung des angeordneten Zusatzaggregats.

Betrachtet man die Fig. 5, so kann man erkennen, dass der Wärmetauscher 3 eine Grundplatte 20 mit einer an einem Rand der Grundplatte 20 angeordneten Durchgangsöffnung 21 aufweist, die bei montiertem Flüssigfiltermodul 1 mit dem Kanal 8 fluchtet. Durch diese Durchgangsöffnung 21 und den Kanal 8 sind dabei die Hülse 18 und die Schraube 19 geführt.

Zusätzlich kann noch ein Positionierelement 23 (vgl. Fig. 1) vorgesehen sein, welches einerseits in eine Ausnehmung 24 am Wärmetauscher 3 bzw. an der Grundplatte 20 des Wärmetauschers 3 und andererseits in eine Ausnehmung am Zwischenstück 2 eingreift und darüber eine Relativlage des Wärmetauschers 3 zum Zwischenstück 2 definiert. Zusammen mit dem Sicherungselement 9, beispielsweise der Hülse 18, kann eine exakte Relativlage des Wärmetauschers 3 zum Zwischenstück 2 definiert werden.

Mit dem erfindungsgemäßen Flüssigfiltermodul 1 ist es erstmals möglich, auf zusätzliche und unter Umständen konstruktiv aufwendige Sicherungselemente zur Sicherung des Einbauteils 7, das heißt konkret des Verschlusselements 7' oder alternativ des Ventils 7", im Aufnahmekanal 8 zu verzichten und hierfür ein zumindest an anderer Stelle ohnehin eingesetztes Sicherungselement 9, 18 zu verwenden, wodurch sich der Konstruktionsaufwand und darüber auch die Herstellungskosten reduzieren und die Flexibilität steigern lassen.

## Patentansprüche

1. Flüssigfiltermodul (1) mit einer Filtereinrichtung (4) und einem damit über ein Zwischenstück (2) gekoppelten Wärmetauscher (3), wobei im Zwischenstück (2) zumindest ein Flüssigkeitskanal (5) und ein diesen querender Aufnahmekanal (6) zur Aufnahme eines Einbauteils (7) vorgesehen sind, wobei das Einbauteil (7) als Verschlusselement (7') oder als Ventil (7") ausgebildet ist,
**dadurch gekennzeichnet,**
**dass** ein den Aufnahmekanal (6) querender Kanal (8) vorgesehen ist, in dem ein Sicherungselement (9) angeordnet ist, welches das Einbauteil (7) fixiert und dass der Wärmetauscher (3) eine Grundplatte (20) mit einer an einem Rand angeordneten Durchgangsöffnung (21) aufweist, die bei montiertem Flüssigfiltermodul (1) mit dem Kanal (8) fluchtet.

2. Flüssigfiltermodul nach Anspruch 1
**dadurch gekennzeichnet,**
**dass** das Verschlusselement (7') als Kunststoffspritzgussteil oder aus Metall ausgebildet ist.

3. Flüssigfiltermodul nach Anspruch 2,
**dadurch gekennzeichnet,**
**dass** das Verschlusselement (7') eine Umfangsringnut (15) aufweist, in welcher eine O-Ringdichtung (16) angeordnet ist, über die das Verschlusselement (7') flüssigkeitsdicht im Aufnahmekanal (6) des Zwischenstücks (2) aufgenommen ist.

4. Flüssigfiltermodul nach Anspruch 2 oder 3,
**dadurch gekennzeichnet,**
**dass** das Verschlusselement (7') eine Durchgangsöffnung (21') aufweist, durch die das Sicherungselement (9) hindurch greift.

5. Flüssigfiltermodul nach einem der Ansprüche 1 bis 4,
**dadurch gekennzeichnet,**
- **dass** das Sicherungselement (9) als Hülse (18) ausgebildet ist, durch die eine Schraube (19) zur Befestigung des Flüssigfiltermoduls (1) an einer Brennkraftmaschine (13) führbar ist, oder
- **dass** das Sicherungselement (9) als Schraube (19) ausgebildet ist.

6. Flüssigfiltermodul nach Anspruch 5, erste Alternative,
**dadurch gekennzeichnet,**
**dass** die Hülse (18) kürzer oder gleich lang ist wie die Höhe des Zwischenstücks (2).

7. Flüssigfiltermodul nach Anspruch 1 und nach Anspruch 5 oder 6,
**dadurch gekennzeichnet,**
**dass** durch die Durchgangsöffnung (21) und den Kanal (8) die Hülse (18) und die Schraube (19) geführt sind.

8. Flüssigfiltermodul nach einem der vorhergehenden Ansprüche,
**dadurch gekennzeichnet,**
- **dass** das Zwischenstück (2) aus Kunststoff oder aus Metall ausgebildet ist, und/oder
- **dass** zumindest ein Positionierelement (23) vorgesehen ist, welches einerseits in eine Ausnehmung (23) am Wärmetauscher (3) und andererseits in eine Ausnehmung am Zwischenstück (2) eingreift und eine Relativlage des Wärmetauschers (3) am Zwischenstück (2) definiert.

9. Brennkraftmaschine (13) mit einem Flüssigfiltermodul (1) nach einem der Ansprüche 1 bis 8.

## Claims

1. Liquid filter module (1) having a filter device (4) and a heat exchanger (3) coupled thereto via an intermediate piece (2), wherein at least one liquid channel (5) and a receiving channel (6) crossing the latter are provided in the intermediate piece (2) for receiving an installation part (7), wherein the installation part (7) is designed as a closure element (7') or as a valve (7"),
**characterised in that**
a channel (8) crossing the receiving channel (6) is provided in which channel a securing element (9) is arranged which fixes the installation part (7) and **in that** the heat exchanger (3) has a base plate (20) with a through opening (21) arranged on an edge which through opening is flush with the channel (8) when the liquid filter module (1) is mounted.

2. Liquid filter module according to claim 1,
**characterised in that**
the closure element (7') is designed as a plastic injection-moulded part or is made of metal.

3. Liquid filter module according to claim 2,
**characterised in that**
the closure element (7') has a peripheral annular groove (15) in which an O-ring seal (16) is arranged, by means of which the closure element (7') is received in the receiving channel (6) of the intermediate piece (2) in a fluid-tight manner.

4. Liquid filter module according to claim 2 or 3,
**characterised in that**
the closure element (7') has a through opening (21') through which the securing element (9) grips through.

5. Liquid filter module according to any of claims 1 to 4,
**characterised in that**
- the securing element (9) is designed as a sleeve (18) through which a screw (19) can be guided for securing the liquid filter module (1) to an internal combustion engine (13), or
- the securing element (9) is designed as a screw (19).

6. Liquid filter module according to claim 5, first alternative,
**characterised in that**
the sleeve (18) is shorter than or of the same length as the height of the intermediate piece (2).

7. Liquid filter module according to claim 1 and according to claim 5 or 6,
**characterised in that**
the sleeve (18) and the screw (19) are guided through the through opening (21) and the channel (8).

8. Liquid filter module according to any of the preceding claims,
**characterised in that**
- the intermediate piece (2) is made of plastic or metal and/or
- at least one positioning element (23) is provided which engages on the one hand in a recess (23) on the heat exchanger (3) and on the other hand in a recess on the intermediate piece (2) and defines a relative position of the heat exchanger (3) on the intermediate piece (2).

9. Internal combustion engine (13) with a liquid filter module (1) according to any of claims 1 to 8.

## Revendications

1. Module de filtre de liquide (1) avec un dispositif de filtre (4) et avec un échangeur de chaleur (3) couplé à celui-ci via une pièce intermédiaire (2), dans lequel au moins un canal de liquide (5) et un canal de logement (6) croisant celui-ci et destiné à loger une pièce à insérer (7) sont prévus dans la pièce intermédiaire (2), dans lequel la pièce à insérer (7) est réalisée sous forme d'élément d'obturation (7') ou de soupape (7"),
**caractérisé en ce qu'**il est prévu un canal (8) qui traverse le canal de logement (6) et dans lequel est agencé un élément de sécurité (9) qui fixe la pièce à insérer (7) et **en ce que** l'échangeur de chaleur (3) comporte une plaque de base (20) avec une ouverture de passage (21) qui est agencée au niveau d'un bord et qui est alignée avec le canal (8) lorsque le module de filtre de liquide (1) est monté.

2. Module de filtre de liquide selon la revendication 1, **caractérisé en ce que** l'élément d'obturation (7') est réalisé sous forme de pièce en plastique moulée par injection ou en métal.

3. Module de filtre de liquide selon la revendication 2, **caractérisé en ce que** l'élément d'obturation (7') comporte une rainure annulaire circonférentielle (15) dans laquelle est agencé un joint torique d'étanchéité (16) par l'intermédiaire duquel l'élément d'obturation (7') est logé de manière étanche au liquide dans le canal de logement (6) de la pièce intermédiaire (2).

4. Module de filtre de liquide selon la revendication 2 ou 3, **caractérisé en ce que** l'élément d'obturation (7') comporte une ouverture de passage (21') à travers laquelle pénètre l'élément de sécurité (9).

5. Module de filtre de liquide selon l'une quelconque des revendications 1 à 4, **caractérisé en ce**
- **que** l'élément de sécurité (9) est réalisé sous forme de manchon (18) à travers lequel peut être guidée une vis (19) en vue de la fixation du module de filtre de liquide (1) à un moteur à combustion interne (13), ou
- **que** l'élément de sécurité (9) est réalisé sous forme de vis (19).

6. Module de filtre de liquide selon la revendication 5, première alternative, **caractérisé en ce que** le manchon (18) est plus court ou de même longueur que la hauteur de la pièce intermédiaire (2).

7. Module de filtre de liquide selon la revendication 1 et selon la revendication 5 ou 6, **caractérisé en ce que** le manchon (18) et la vis (19) sont guidés à travers l'ouverture de passage (21) et le canal (8).

8. Module de filtre de liquide selon l'une quelconque des revendications précédentes, **caractérisé en ce**
- **que** la pièce intermédiaire (2) est réalisée en plastique ou en métal, et/ou
- **qu'**il est prévu au moins un élément de positionnement (23) qui pénètre d'une part dans un évidement (23) au niveau de l'échangeur de chaleur (3) et d'autre part dans un évidement au niveau de la pièce intermédiaire (2) et qui définit une position relative de l'échangeur de chaleur (3) au niveau de la pièce intermédiaire (2).

9. Moteur à combustion interne (13) avec un module de filtre de liquide (1) selon l'une quelconque des revendications 1 à 8.
